(19) Europäisches Patentamt
European Patent Office
Office européen des brevets

(11) Veröffentlichungsnummer : **0 447 358 A2**

(12) **EUROPÄISCHE PATENTANMELDUNG**

(21) Anmeldenummer : **91810143.7**

(51) Int. Cl.$^5$ : **C08G 65/40**

(22) Anmeldetag : **04.03.91**

(30) Priorität : **12.03.90 CH 790/90**

(43) Veröffentlichungstag der Anmeldung :
**18.09.91 Patentblatt 91/38**

(84) Benannte Vertragsstaaten :
**DE ES FR GB IT NL SE**

(71) Anmelder : **CIBA-GEIGY AG**
**Klybeckstrasse 141**
**CH-4002 Basel (CH)**

(72) Erfinder : **Pfaendner, Rudolf, Dr.**
**Sackgasse 3**
**W-6149 Rimbach/Odenwald 1 (DE)**
Erfinder : **Kainmüller, Thomas Dr.**
**Am Kümmelberg 1**
**W - 6145 Lindenfels 1 (DE)**
Erfinder : **Hoffmann, Kurt**
**Heidenbergstrasse 15**
**W-6147 Lautertal 2 (DE)**
Erfinder : **Stockinger, Friedrich**
**Au Fernotz**
**CH-1784 Courtepin (CH)**
Erfinder : **Kramer, Andreas, Dr.**
**Bundtels**
**CH-3186 Düdingen (CH)**

(54) **Lösliche Polyarylenethersulfone.**

(57) Polyarylenethersulfone mit einer reduzierten Vikosität von 0,1 bis 2,0 dl/g, gemessen bei 25°C an einer 1 %igen Lösung in N-Methylpyrrolidon (NMP), die, bezogen auf die Gesamtmenge der im Polyarylenethersulfonharz vorhandenen Strukturelemente, 99-1 Mol-% eines wiederkehrenden Strukturelementes der Formel I

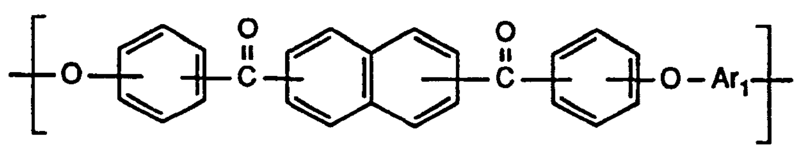

(I)

und 1-99 Mol-% eines wiederkehrenden Strukturelementes der Formel II

$$-[O-Ar_2-O-Ar_1]- \qquad (II)$$

enthalten, worin im Strukturelement der Formel I die aromatischen Ringe unsubstituiert oder durch ein oder mehere $C_1$-$C_4$-Alkyle, $C_1$-$C_4$-Alkoxy oder Halogenatome substituiert sind,
$Ar_1$ einen unsubstituierten oder durch ein oder mehrere $C_1$-$C_4$-Alkyle, $C_1$-$C_4$-Alkoxy oder Halogene substituierten Rest der Formeln IIIa-IIIc

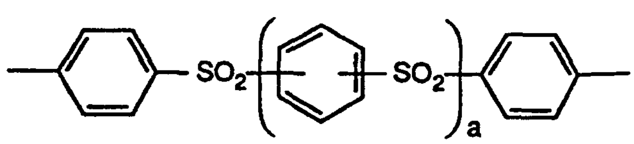

(IIIa),

wobei a für Null oder die Zahl 1 steht,

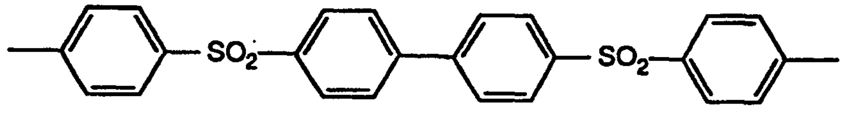

(IIIb)

oder

EP 0 447 358 A2

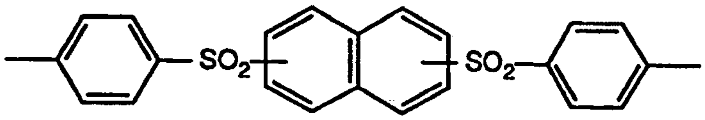 (IIIc)

bedeutet und
$Ar_2$ einen unsubstituierten oder durch ein oder mehrere $C_1$-$C_4$-Alkyle, $C_1$-$C_4$-Alkoxy oder Halogene substituierten Rest der Formeln IVa-IVe

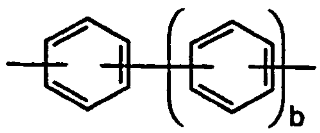 (IVa),

wobei b Null oder die Zahl 1 bedeutet,

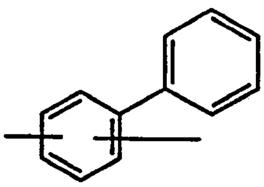 (IVb), 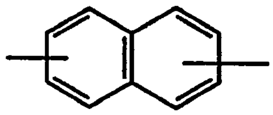 (IVc),

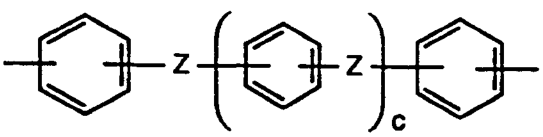 (IVd),

wobei c Null oder die Zahl 1 ist,

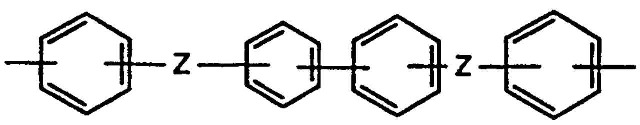 (IVe)

darstellt, worin Z für -CO-, $-SO_2-$, -SO-, -S-, -O-, $-C(CH_3)_2$, $-C(CF_3)_2$, $-CH_2-$,

$-C(CH_3)(C_6H_5)-$ oder $-P(R)O-$ steht, worin R ein Methyl oder Phenyl bedeutet, sind in gebräuchlichen organischen Lösungsmitteln löslich und lassen sich aus der Lösung heraus zu Filmen verarbeiten oder in andere Matrixharze einbringen.

# LÖSLICHE POLYARYLENETHERSULFONE

Die vorliegende Erfindung betrifft in halogenierten Kohlenwasserstoffen lösliche Polyarylenethersulfone enthaltend Bis-(benzoyl)-naphthalin-Einheiten, Verfahren zu deren Herstellung, die aus den erfindungsgemässen Polyarylenethersulfonen hergestellten Formstoffe, Beschichtungen oder Folien sowie die Verwendung der erfindungsgemässen Polyarylenethersulfone zum Modifizieren von Matrixharzen.

Polyethersulfone sind technische Werkstoffe mit sehr guten mechanischen und thermischen Eigenschaften, die in der Regel in halogenierten Kohlenwasserstoffen unlöslich sind oder instabile Lösungen bilden.

Beispielsweise sind Polyarylenethersulfone mit Iso- und Terephthalophenon-Einheiten aus der DE-OS 3 014 230 bekannt. Diese ketogruppenhaltigen Polyether weisen eine verbesserte Lösungsmittelbeständigkeit auf.

Ferner sind Polyarylenethersulfone mit 4,4'-Bis-(4-benzoyl)-biphenyl- und 2,6-Bis-(4-benzoyl)-naphthalin-Einheiten aus der EP-A 0194 062 bekannt. Auch diese Polyarylenethersulfone zeichnen sich durch eine sehr gute Lösungsmittelbeständigkeit aus.

Für manche Anwendungen, insbesondere bei der Modifizierung von duromeren Matrixharzen, sind Polyethersulfone erforderlich, die verbesserte Löslichkeitseigenschaften aufweisen, ohne dass die thermischen Eigenschaften, wie Wärmeformbeständigkeit, d.h., die Glasübergangstemperatur, erheblich reduziert werden.

Es wurde nun gefunden, dass bestimmte Copolymere auf Basis von Polyarylenethersulfonen mit Bis-(benzoyl)-naphthalin-Einheiten, die mit einem bestimmten Diphenol bzw. einer bestimmten Dihalogenverbindung modifiziert sind, überraschend in gebräuchlichen organischen Lösungsmitteln, vorzugsweise in halogenierten Kohlenwasserstoffen, gut löslich sind und stabile Lösungen bilden.

Gegenstand der vorliegenden Erfindung sind somit in halogenierten Kohlenwasserstoffen lösliche Polyarylenethersulfone mit einer reduzierten Viskosität von 0,1 bis 2,0 dl/g, gemessen bei 25°C an einer 1%igen Lösung in N-Methylpyrrolidon (NMP), die, bezogen auf die Gesamtmenge der im Polyarylenethersulfonharz vorhandenen Strukturelemente, 99-1 Mol-% eines wiederkehrenden Strukturelementes der Formel I

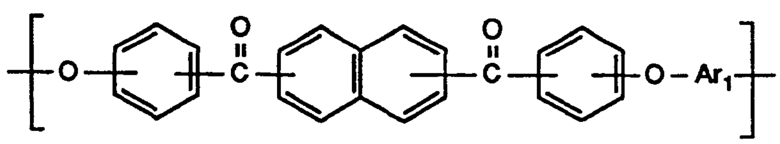

(I)

und 1-99 Mol-% eines wiederkehrenden Strukturelementes der Formel II

$$-\!\!\left[O-Ar_2-O-Ar_1\right]\!\!- \qquad \text{(II)}$$

enthalten, worin im Strukturelement der Formel I die aromatischen Ringe unsubstituiert oder durch ein oder mehrere $C_1$-$C_4$-Alkyle, $C_1$-$C_4$-Alkoxy oder Halogenatome substituiert sind,
$Ar_1$ einen unsubstituierten oder durch ein oder mehrere $C_1$-$C_4$-Alkyle, $C_1$-$C_4$-Alkoxy oder Halogene substituierten Rest der Formeln IIIa-IIIc

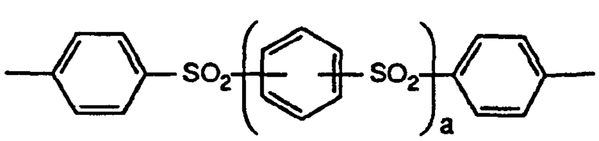

(IIIa),

wobei a für Null oder die Zahl 1 steht,

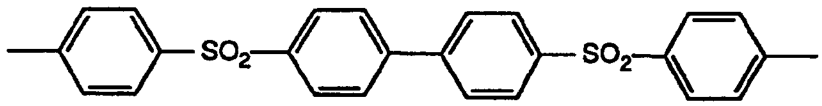 (IIIb)

oder

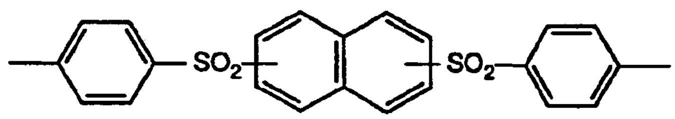 (IIIc)

bedeutet und

$Ar_2$ einen unsubstituierten oder durch ein oder mehrere $C_1$-$C_4$-Alkyle, $C_1$-$C_4$-Alkoxy oder Halogene substituierten Rest der Formeln IVa-IVe

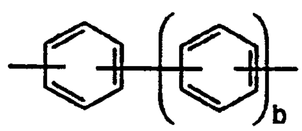 (IVa),

wobei b Null oder die Zahl 1 bedeutet,

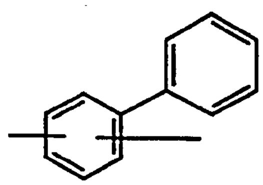 (IVb), 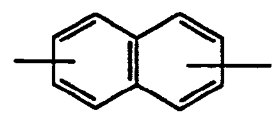 (IVc),

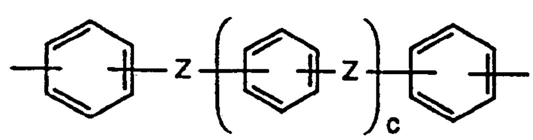 (IVd),

wobei c Null oder die Zahl 1 ist,

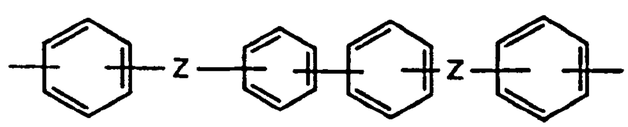 (IVe)

darstellt, worin Z für -CO-, $-SO_2-$, -SO-, -S-, -O-, $-C(CH_3)_2$, $-C(CF_3)_2$, $-CH_2-$, $-C(CH_3)(C_6H_5)-$ oder -P(R)O- steht, worin R ein Methyl oder Phenyl bedeutet.

Vorzugsweise enthalten die erfindungsgemässen Polyarylenethersulfone 5-95 Mol-% eines wiederkehrenden Strukturelementes der Formel I und 95-5 Mol-% eines wiederkehrenden Strukturelementes der Formel II.

Insbesondere sind in den erfindungsgemässen Polyarylenethersulfonen 5-75 Mol-% eines wiederkehrenden Strukturelementes der Formel I und 95-25 Mol-% eines wiederkehrenden Strukturelementes der Formel II enthalten.

In den erfindungsgemässen Polyarylenethersulfonen sind die Strukturelemente der Formeln I und II vorzugsweise unsubstituiert.

Der Rest $Ar_1$ im Strukturelement der Formeln I und II steht vorzugsweise für einen unsubstituierten Rest der Formel IIIa, insbesondere für den Rest

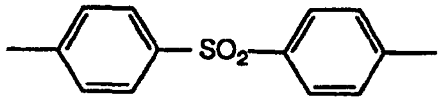 .

Der Rest $Ar_2$ im Strukturelement der Formel II steht vorzugsweise für einen Rest der Formeln

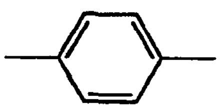 , 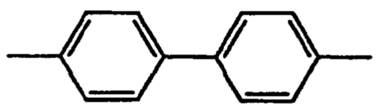 , 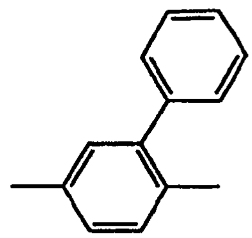 , 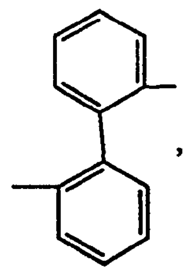 ,

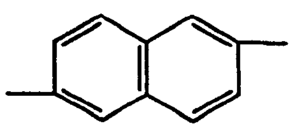 , 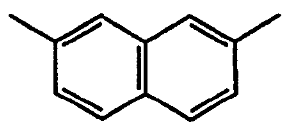 , 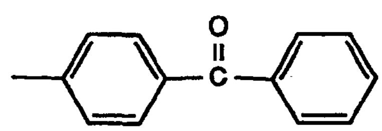 ,

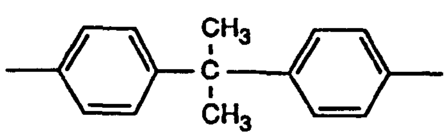 oder 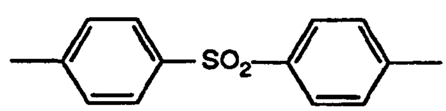 ,

insbesondere für den Rest 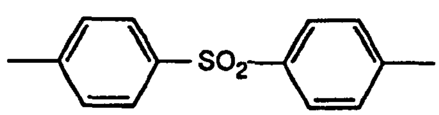 .

Besonders bevorzugte erfindungsgemässe Polyarylenethersulfone enthalten 50-10 Mol-% des wiederkehrenden Strukturelementes der folgenden Formel

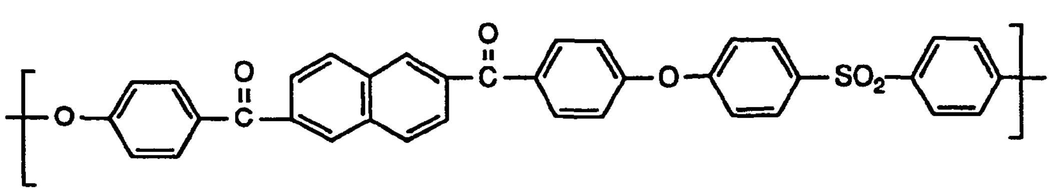

und 50-90 Mol-% eines wiederkehrenden Strukturelementes der folgenden Formel

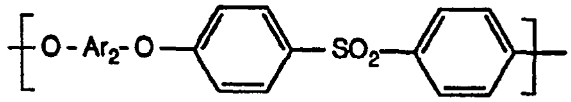 ,

worin $Ar_2$ die oben angegebene bevorzugte Bedeutung hat, insbesondere für den Rest

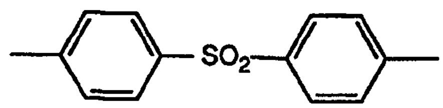

steht.

Die erfindungsgemässen Polyarylenethersulfone können hergestellt werden, indem man

(a) ein Gemisch aus einer Diphenolverbindung der Formel V

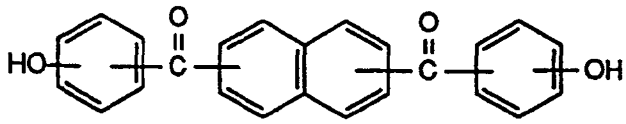 (V),

worin die aromatischen Ringe unsubstituiert oder durch ein oder mehrere $C_1$-$C_4$-Alkyle, $C_1$-$C_4$-Alkoxy oder Halogenatome substituiert sind, und einer darin bis zu 99 Mol-% enthaltenen Diphenolverbindung der Formel VI

$HO-Ar_2-OH$ (VI),

worin $Ar_2$ die oben angegebene Bedeutung hat, in äquimolaren Mengen mit einer Dihalogenverbindung der Formel VII

$Hal-Ar_1-Hal$ (VII),

worin $Ar_1$ die oben angegebene Bedeutung hat und Hal für ein Halogenatom, vorzugsweise Fluor oder Chlor, steht, in Gegenwart von Alkali und in einem aprotischen Lösungsmittel polykondensiert oder

(b) ein Gemisch aus einer Dihalogenverbindung der Formel VIII

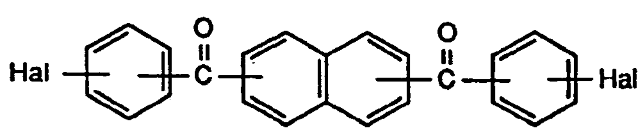 (VIII),

worin die aromatischen Ringe unsubstituiert oder durch ein oder mehrere $C_1$-$C_4$-Alkyle, $C_1$-$C_4$-Alkoxy oder Halogenatome substituiert sind und Hal für ein Halogenatom, vorzugsweise Fluor oder Chlor, steht, und einer darin bis zu 99 Mol-% enthaltenen Dihalogenverbindung der Formel VII in äquimolaren Mengen mit einer Diphenolverbindung der Formel VI in Gegenwart von Alkali und in einem aprotischen Lösungsmittel polykondensiert, bis das erhaltene Polyarylenethersulfon eine reduzierte Viskosität von 0,1 bis 2,0 dl/g aufweist, gemessen an einer 1%igen Lösung in NMP (1 g Polymeres in 100 ml NMP) bei 25°C.

Vorzugsweise polykondensiert man ein Gemisch aus einer Diphenolverbindung der Formel V und einer darin zu 95-5 Mol-%, insbesondere 75-5 Mol-%, enthaltenen Diphenolverbindung der Formel VI in äquivolaren Mengen mit einer Dihalogenverbindung der Formel VII in Gegenwart von Alkali und in einem aprotischen Lösungsmittel, bis das erhaltene Polyarylenethersulfon vorzugsweise eine reduzierte Viskosität von 0,15 bis 1,8 dl/g, insbesondere 0,2-1,5 dl/g, aufweist.

Anstelle der Diphenolverbindung der Formel V oder der Formel VI können in an sich bekannter Weise auch die entsprechenden Alkali- und Erdalkali-Phenolate, zum Beispiel die Kalium- oder Calciumphenolate, eingesetzt werden.

Unter äquimolaren Mengen versteht man im Zusammenhang mit dem oben angegebenen Verfahren ein Molverhältnis der Diphenolverbindung der Formel VI oder der Diphenolverbindungen der Formeln V und VI zu der Dihalogenverbindung der Formel VII oder den Dihalogenverbindungen der Formeln VIII und VII von 0,9 bis 1,1. Bevorzugt ist ein Molverhältnis von 0,95 bis 1,05.

Als Alkali verwendet man in diesem Verfahren in der Regel Alkali- und Erdalkalicarbonate, wie Natrium-, Kalium- oder Calciumcarbonat; doch können auch andere alkalische Reagentien, wie Natriumhydroxid, Kaliumhydroxid oder Calciumhydroxid, Verwendung finden.

Polare, aprotische Lösungsmittel, die beim Verfahren zur Herstellung der erfindungs gemässen Polyetherharze eingesetzt werden können, sind beispielsweise Dimethylsulfoxid, Dimethylacetamid, Diethylacetamid, Tetramethylharnstoff, N-Methylcaprolactam, N-Methylpyrrolidon und bevorzugt Diphenylsulfon.

Die Reaktion wird zweckmässig bei erhöhter Temperatur durchgeführt, vorzugsweise bis zur Rückflusstemperatur des Lösungsmittels, also etwa bis 350°C.

Häufig empfiehlt sich die Mitverwendung eines Schleppmittels, wie z.B. Chlorbenzol, Xylol oder Toluol, um das bei der Umsetzung gebildete Wasser azeotrop aus dem Reaktionsgemisch entfernen zu können.

Diphenolverbindungen der Formel V stellen bekannte Verbindungen dar. Beispielsweise sind 2,6-Bis-(4-hydroxybenzoyl)-naphthalin und 2,7-bis-(4-hydroxybenzoyl)-naphthalin aus der DE-OS 38 04 159 bekannt, und chlor- oder methylsubstituiertes 2,6-Bis-(4-hydroxybenzoyl)-naphthalin aus den US-Patenten 4 447 592 und 4 276 226.

Die Diphenolverbindungen der Formel VI stellen ebenfalls bekannte Verbindungen dar und sind grösstenteils im Handel erhältlich. Beispiele für geeignete zweiwertige Phenole der Formel VI sind Hydrochinon, Resorcin, 4,4'-Dihydroxybiphenyl, 2,5-Dihydroxybiphenyl, 4,4'-Dihydroxydiphenylether, 4,4'-Dihydroxydiphenylsulfon, 4,4'-Dihydroxy-3,3',5,5'-tetramethyldiphenylsulfon, 4,4'-Dihydroxybenzophenon, 4,4'-Dihydroxydiphenylmethan, 4,4'-Dihydroxydiphenylthioether, 2,2-Di-(4-hydroxyphenyl)-propan oder Dihydroxynaphthalin.

Die Dihalogenverbindungen der Formel VII sind ebenfalls bekannt, beispielsweise aus der DE-OS 30 14 230 und der EP-A-0 001 879. Geeignete Dihalogenverbindungen der Formel VII sind beispielsweise 4,4'-Dichlordiphenylsulfon, 4,4'-Difluordiphenylsulfon, 1,4-Bis-(4-chlorphenylsulfonyl)-benzol, 4,4'-Bis-(4-chlorphenylsulfonyl)-biphenyl und 2,6-Bis-(4-chlorphenylsulfonyl)-naphthalin.

Die Dihalogenverbindungen der Formel VIII, wie beispielsweise 2,6- oder 2,7-Di-(p-fluorbenzoyl)-naphthalin oder 2,6- oder 2,7-Di-(p-chlorbenzoyl)-naphthalin, stellen ebenfalls bekannte Verbindungen dar und werden beispielsweise in der bereits genannten DE-OS 38 04 159 und in POLYMER, 1988, Band 29, Seite 358 ff beschrieben.

Wie eingangs erwähnt, sind die erfindungsgemässen Polyarylenethersulfone in gebräuchlichen organischen Lösungsmitteln, vorzugsweise in halogenierten, d.h., chlorierten oder fluorierten, Kohlenwasserstoffen, insbesondere in chlorierten Kohlenwasserstoffen, wie beispielsweise Methylenchlorid, Trichlormethan oder Dichlorethan löslich. Die erfindungsgemässen Polyarylenethersulfone sind auch in polaren aprotischen Lösungsmitteln, wie N-Methylpyrrolidon, N,N-Dimethylformamid, Dimethylsulfoxid und Sulfolan, oder meist auch in cyclischen Ethern, wie Tetrahydrofuran oder Dioxan, sowie auch in Cyclohexanon löslich. Aufgrund ihrer Löslichkeit können die erfindungsgemässen Polyarylenethersulfone vorteilhaft aus einer Lösung heraus zu Filmen verarbeitet oder in duromere oder thermoplastische Matrixsysteme eingebracht werden.

Die erfindungsgemässen Polyarylenethersulfone können in der für Thermoplaste üblichen Weise eingesetzt werden und zu Formkörpern, Filmen oder Folien oder Beschichtungen verarbeitet werden. Gegenstand vorliegender Erfindung sind somit auch die aus den erfindungsgemässen Polyarylenethersulfonen hergestellten Gegenstände, wie Formstoffe, Beschichtungen oder Folien.

Vor der Verarbeitung der beispielsweise als Schmelze oder insbesondere als Lösung vorliegenden Polyarylenethersulfone können übliche Zusatzstoffe, wie beispielsweise Füllstoffe, Pigmente, Stabilisatoren oder Verstärkungsmittel, wie Kohlenstoff-, Bor-, Metall- oder Glasfasern, zugegeben werden.

Die erfindungsgemässen Polyarylenethersulfone können auch als Matrixharze für die Herstellung von Faserverbundsystemen verwendet werden, wobei man als Verstärkungsfasern die üblichen bei der Verstärkung technischer Werkstoffe verwendeten Fasern einsetzen kann. Diese können organische oder anorganische Fasern, Naturfasern oder Synthesefasern sein, und als Faserbündel, als orientierte oder nicht-orientierte Fasern oder als Endlosfasern vorliegen.

Eine weitere bevorzugte Anwendungsmöglichkeit für die erfindungsgemässen Polyarylenethersulfone besteht aufgrund ihrer Löslichkeit in der Modifizierung anderer Matrixharze. Diese können Thermoplaste oder Duromere sein. So wird beispielsweise bei der Modifizierung von duromeren Matrixharzen mit thermoplastischen Polymeren im allgemeinen mit möglichst konzentrierten Lösungen dieser Polymeren in herkömmlichen organischen Lösungsmitteln gearbeitet. Die Lösungsmittel sollen nach dem Einarbeiten rasch entfernbar sein und deshalb möglichst niedrige Verdampfungspunkte aufweisen.

Die Verwendung der erfindungsgemässen Polyarylenethersulfone zum Modifizieren von thermoplastischen und duromeren Matrixharzen stellt einen weiteren Erfindungsgegenstand dar.

Die folgenden Beispiele dienen zur Erläuterung der Erfindung.

Herstellung von Ausgangsverbindungen

Beispiel A: 2,6-Bis-(4-methoxybenzoyl)-naphthalin

In einer Rührapparatur, ausgerüstet mit einem 750 ml Sulfierkolben, Thermometer, Rührer, Kühler und Stickstoffspülung, werden 25,3 g (0,1 Mol) Naphthalin-2,6-dicarbonsäuredichlorid und 32,4 g (0,2 Mol) Anisol in 200 ml Nitrobenzol vorgelegt und unter Rühren innerhalb von 15 Minuten (min) bei 12°- 18°C mit 26,6 g (0,2 Mol) Aluminiumchlorid versetzt. Anschliessend wird das Reaktionsgemisch 90 min lang bei 40°C umgesetzt, danach auf Raumtemperatur abgekühlt und in 1,5 Liter HCl-saurem Wasser intensiv vermischt. Die entstandene Suspension wird mit 1,2 Liter N-Methylpyrrolidon verdünnt, das Gemisch auf 130°C erwärmt, die entstandene klare Lösung abgekühlt und das auskristallisierte Produkt durch Filtration isoliert. Der Filterrückstand wird bei 130°C im Vakuum getrocknet, und man erhält 25,9 g (65,4 % der Theorie) des gewünschten Produktes, das bei 251 °C schmilzt.

| Elementaranalyse: | berechnet | gefunden |
|---|---|---|
| | C = 78,77 % | C = 78,68 % |
| | H = 5,09 % | H = 5,21 %. |

Beispiel B: 2,6-Bis-(4-hydroxybenzoyl)-naphthalin

In einem 2,5 Liter Sulfierkolben, ausgestattet mit Thermometer, Rührer, Kühler und Stickstoffspülung, werden 153 g (0,39 g Mol) 2,6-Bis-(4-methoxybenzoyl)-naphthalin in 1350 ml Toluol vorgelegt und innerhalb von 15 min bei 8°C Innentemperatur unter Rühren portionenweise 282,7 g (2,12 Mol) Aluminiumchlorid zugegeben. Anschliessend wird das Reaktionsgemisch 4 Stunden (h) lang bei 75°C gerührt, danach auf Raumtemperatur abgekühlt und in 10 Liter Wasser unter kräftigem Rühren eingetragen. Die entstandene Suspension wird filtriert und der Rückstand bei 130°C im Vakuum getrocknet. Man erhält 142,4 g (99,9 % der Theorie) eines bräunlichen Pulvers, das bei 307°C schmilzt. 67 g des Rohproduktes werden in 320,1 g 5 %-iger wässriger Natronlauge warm gelöst, die Lösung über Hyflo (Filtermasse auf Basis von Diatomeenerde (Kieselgur)) filtriert und das klare Filtrat in 2 Liter Wässer, versetzt mit 39,5 g 37 %-iger Salzsäure, eingetragen. Das ausgefällte Produkt wird filtriert, mit Wasser gewaschen und bei 130°C im Vakuum getrocknet. Es werden 62,3 g (92,8 % der Theorie) des gewünschten Diphenols erhalten. Das Produkt schmilzt bei 307°C.

| Elementaranalyse: | berechnet | gefunden |
|---|---|---|
| | C = 78,25 % | C = 78,00 % |
| | H = 4,38 % | H = 4,36 %. |

Das durch potentiometrische Titration ermittelte Aequivalentgewicht beträgt 185 (Theorie: 184,2).

Beispiel 1: Polyarylenethersulfon-Copolymer aus 2,6-Bis-(4-hydroxybenzoyl)-naphthalin, 4,4′-Dihydroxydiphenylsulfon und 4,4′-Dichlordiphenylsulfon

In einem Rundkolben mit Rührer und Schutzgasanschluss wird unter Stickstoff eine Mischung aus 9,27 g (0,0252 Mol) 2,6-Bis-(4-hydroxybenzoyl)-naphthalin, 18,865 g (0,0752 Mol) 4,4′-Dihydroxydiphenylsulfon, 87,53 g Diphenylsulfon, 14,54 g (0,1052 Mol) Kaliumcarbonat und 55 g Xylol bei einer Badtemperatur von 200°C erhitzt und ein Xylol/Wasser-Gemisch abdestilliert. Gegen Ende des Destillationsvorganges wird dabei kurzzeitig Vakuum (2 mbar) angelegt. Sodann werden 28,73 g (0,1001 Mol) 4,4′-Dichlordiphenylsulfon zu der Reaktionsmischung gegeben, die Temperatur innerhalb von 25 Minuten (min) auf 250°C erhöht und dort 1 Stunde (h) belassen. Danach wird die Temperatur auf 275°C (1 h) und anschliessend auf 300°C angehoben. Diese Temperatur wird 3 h beibehalten, wobei die Reaktionsmischung in zunehmendem Masse viskos wird.

Nach Abkühlen wird das Reaktionsgemisch dem Kolben entnommen, puverisiert, mit verdünnter Essigsäure versetzt und zunächst mit Wasser und dann mit Aceton extrahiert. Anschliessend wird das Polymer in Methylenchlorid gelöst, eine geringe Menge unlösliches Material abfiltriert und in Isopropanol ausgefällt. Das so gereinigte Polymer wird danach im Vakuumtrockenschrank bis zu einer Temperatur von 240°C getrocknet. Ein auf diese Weise hergestelltes Polyarylenethersulfon besitzt eine reduzierte Viskosität (1 g Polymeres in

100 ml NMP bei 25°C) von 0,42 dl/g. Es ist zu mehr als 20 % in Methylenchlorid und zu mehr als 25 % in Cyclohexanon, nach Erwärmen auf 100°C, löslich. Die mittels Differential Scanning Calorimetry (DSC) bestimmte Glasübergangstemperatur liegt bei 223°C.

Beispiele 2-5:

Die in folgender Tabelle zusammengestellten Beispiele zur Herstelung von Polyarylenethersulfon-Copolymeren werden analog Beispiel 1 durchgeführt.

<u>Tabelle:</u> Polyarylenethersulfon-Copolymere

| Bsp. Nr. | Zusammensetzung | Reaktions-bedingungen | red. Visk. [dl/g] | Glasübergangs-temp. (DSC) [°C] | Löslichkeit in $CH_2Cl_2$ [%] |
|---|---|---|---|---|---|
| 2 | 2,6-Bis(4-hydroxybenzoyl)-naphthalin (0,0402 Mol)<br>4,4'-Dihydroxydiphenylsulfon (0,3610 Mol)<br>4,4'-Dichlordiphenylsulfon (0,4000 Mol) | 1 h/250°C<br>1 h/275°C<br>4 h 15 min/280°C | 0,42 | 228 | > 25 |
| 3 | 2,6-Bis(4-hydroxybenzoyl)-naphthalin (0,0250 Mol)<br>4,4'-Dihydroxydiphenylsulfon (0,0252 Mol)<br>4,4'-Dichlordiphenylsulfon (0,0501 Mol) | 1 h/222°C<br>1 h/250°C<br>2 h 30 min/283°C | 0,79 | 222 | > 25 |
| 4 | 2,6-Bis(4-hydroxybenzoyl)-naphthalin (0,0126 Mol)<br>4,4'-Dihydroxydiphenylsulfon (0,0253 Mol)<br>4,4'-Dihydroxybiphenyl (0,0127 Mol)<br>4,4'-Dichlordiphenylsulfon (0,0501 Mol) | 1 h/225°C<br>1 h/246°C<br>4 h/285°C | 0,39 | 205 | > 25 |
| 5 | 2,6-Bis(4-hydroxybenzoyl-naphthalin (0,0050 Mol)<br>4,4'-Dihydroxydiphenylsulfon (0,0406 Mol)<br>4,4'-Dihydroxybenzophenon (0,0050 Mol)<br>4,4'-Dichlordiphenylsulfon (0,0502 Mol) | 1 h/222°C<br>1 h/247°C<br>1 h 30 min/284°C | 0,46 | 214 | >25 |

Beispiel 6:

Ein nach Beispiel 2 hergestelltes Polyethersulfon-Copolymeres wird zu 30 Gewichtsteilen als Lösung in Methylenchlorid zu einer Mischung, bestehend aus 50 Gewichtsteilen Tetraglycidyldiaminodiphenylmethan und 50 Gewichtsteilen Triglycidyl-p-aminophenol gegeben und das Lösungsmittel im Vakuum entfernt. Nach Zugabe von 50 Gewichtsteilen p-Diaminodiphenylsulfon wird das Gemisch in einer Form 2 h bei 160°C sowie 2 h bei 210°C ausgehärtet. Aus einer so hergestellten Platte werden Prüfkörper geschnitten und die Biegefestigkeit, die Randfaserdehnung nach ISO 178 sowie die Bruchzähigkeit mittels "bend notch" gemäss ASTM E 399 bestimmt.

Biegefestigkeit = 173 $N/mm^2$
Randfaserdehnung = 6,6 %
Bruchzähigkeit = 321 $J/m^2$.

**Patentansprüche**

1. In halogenierten Kohlenwasserstoffen lösliche Polyarylenethersulfone mit einer reduzierten Viskosität von 0,1 bis 2,0 dl/g, gemessen bei 25°C an einer 1%igen Lösung in N-Methylpyrrolidon (NMP), die, bezogen auf die Gesamtmenge der im Polyarylenethersulfonharz vorhandenen Strukturelemente, 99-1 Mol-% eines wiederkehrenden Strukturelementes der Formel I

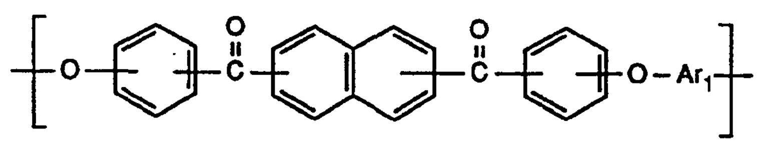

(I)

und 1-99 Mol-% eines wiederkehrenden Strukturelementes der Formel II

$$-[O-Ar_2-O-Ar_1]- \quad (II)$$

enthalten, worin im Strukturelement der Formel I die aromatischen Ringe unsubstituiert oder durch ein oder mehrere $C_1$-$C_4$-Alkyle, $C_1$-$C_4$-Alkoxy oder Halogenatome substituiert sind,
$Ar_1$ einen unsubstituierten oder durch ein oder mehrere $C_1$-$C_4$-Alkyle, $C_1$-$C_4$-Alkoxy oder Halogene substituierten Rest der Formeln IIIa-IIIc

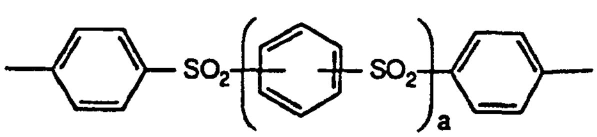

(IIIa),

wobei a für Null oder die Zahl 1 steht,

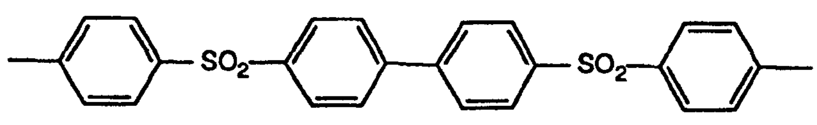

(IIIb)

oder

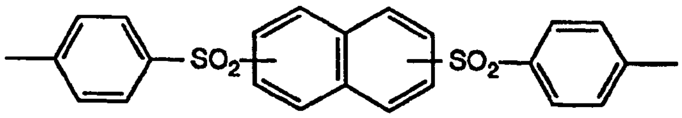

(IIIc)

bedeutet und

$Ar_2$ einen unsubstituierten oder durch ein oder mehrere $C_1$-$C_4$-Alkyle, $C_1$-$C_4$-Alkoxy oder Halogene substituierten Rest der Formeln IVa-IVe

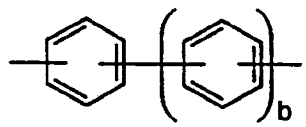

(IVa),

wobei b Null oder die Zahl 1 bedeutet,

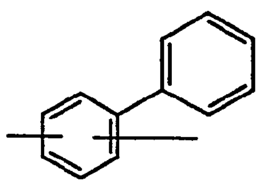

(IVb),

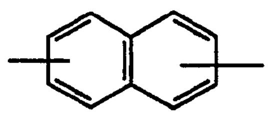

(IVc),

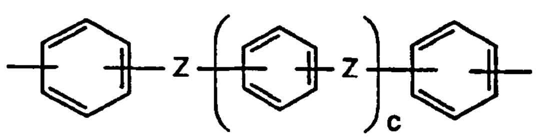

(IVd),

wobei c Null oder die Zahl 1 ist,

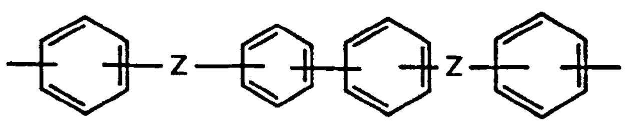

(IVe)

darstellt, worin Z für -CO-, $-SO_2-$, -SO-, -S-, -O-, $-\overset{|}{C}(CH_3)_2$, $-\overset{|}{C}(CF_3)_2$, $-CH_2-$,

$-\underset{\underset{C_6H_5}{|}}{\overset{|}{C}}-CH_3$ oder $-\underset{\underset{R}{|}}{P}O-$ steht, worin R ein Methyl oder Phenyl bedeutet.

2. Polyarylenethersulfone gemäss Anspruch 1, enthaltend 95-5 Mol-% eines wiederkehrenden Strukturelementes der Formel I und 5-95 Mol-% eines wiederkehrenden Strukturelementes der Formel II.

3. Polyarylenethersulfone gemäss Anspruch 1, enthaltend 75-5 Mol-% eines wiederkehrenden Strukturelementes der Formel I und 25-95 Mol-% eines wiederkehrenden Strukturelementes der Formel II.

4. Polyarylenethersulfone gemäss Anspruch 1, enthaltend unsubstituierte Strukturelemente der Formeln I und II.

5. Polyarylenethersulfone gemäss Anspruch 1, worin $Ar_1$ im Strukturelement der Formeln I und II für einen unsubstituierten Rest der Formel IIIa steht.

6. Polyarylenethersulfone gemäss Anspruch 1, worin $Ar_1$ im Strukturelement der Formeln I und II für den Rest

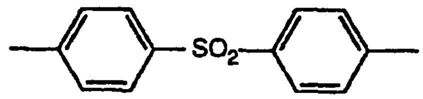

steht.

7. Polyarylenethersulfone gemäss Anspruch 1, worin $Ar_2$ im Strukturelement der Formel II für einen Rest der Formeln

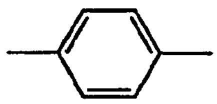 , 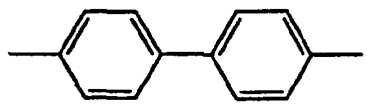 , 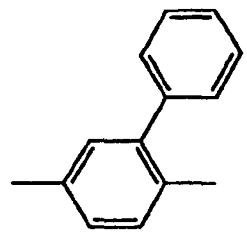 , 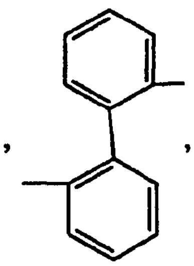 ,

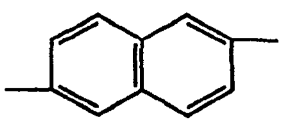 , 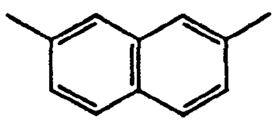 , 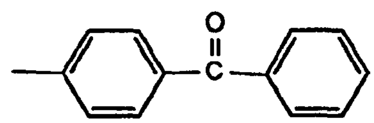 ,

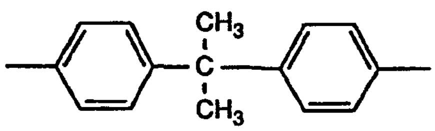 oder 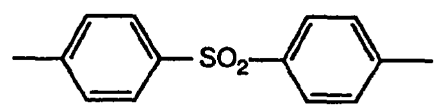 steht.

8. Polyarylenethersulfone gemäss Anspruch 1, worin $Ar_2$ im Strukturelement der Formel II für den Rest

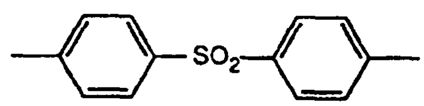

steht.

9. Verfahren zur Herstellung von Polyarylenethersulfonen gemäss Anspruch 1, dadurch gekennzeichnet, dass man

(a) ein Gemisch aus einer Diphenolverbindung der Formel V

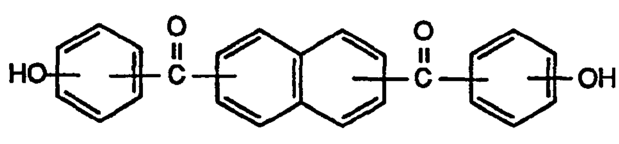 (V),

worin die aromatischen Ringe unsubstituiert oder durch ein oder mehrere $C_1$-$C_4$-Alkyle, $C_1$-$C_4$-Alkoxy oder Halogenatome substituiert sind, und einer darin bis zu 99 Mol-% enthaltenen Diphenolverbindung der Formel VI

$$HO\text{-}Ar_2\text{-}OH \quad (VI),$$

worin $Ar_2$ die gleiche Bedeutung wie in Anspruch 1 hat, in äquimolaren Mengen mit einer Dihalogenverbindung der Formel VII

Hal-$Ar_1$-Hal (VII),

worin $Ar_1$ die gleiche Bedeutung wie in Anspruch 1 hat und Hal für ein Halogenatom, vorzugsweise Fluor oder Chlor, steht, in Gegenwart von Alkali und in einem aprotischen Lösungsmittel polykondensiert oder (b) ein Gemisch aus einer Dihalogenverbindung der Formel VIII

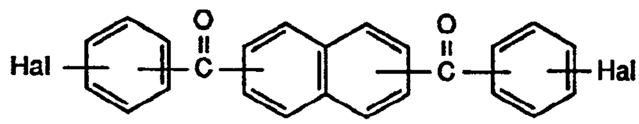
(VIII),

worin die aromatischen Ringe unsubstituiert oder durch ein oder mehrere $C_1$-$C_4$-Alkyle, $C_1$-$C_4$-Alkoxy oder Halogenatome substituiert sind und Hal für ein Halogenatom, vorzugsweise Fluor oder Chlor, steht, und einer darin bis zu 99 Mol-% enthaltenen Dihalogenverbindung der Formel VII in äquimolaren Mengen mit einer Diphenolverbindung der Formel VI in Gegenwart von Alkali und in einem aprotischen Lösungsmittel polykondensiert, bis das erhaltene Polyarylenethersulfon eine reduzierte Viskosität von 0,1 bis 2,0 dl/g aufweist, gemessen an einer 1%igen Lösung in NMP bei 25°C.

**10.** Formstoffe, Beschichtungen oder Folien, enthaltend ein Polyarylenethersulfon gemäss Anspruch 1.

**11.** Verwendung der Polyarylenethersulfone gemäss Anspruch 1 zum Modifizieren von thermoplastischen und duromeren Matrixharzen.

**Patentanspruch Für folgenden Vertragsstaat : ES**

**1.** Verfahren zur Herstellung von in halogenierten Kohlenwasserstoffen löslichen Polyarylenethersulfonen mit einer reduzierten Viskosität von 0,1 bis 2,0 dl/g, gemessen bei 25°C an einer 1 %igen Lösung in N-Methylpyrrolidon (NMP), die, bezogen auf die Gesamtmenge der im Polyarylenethersulfonharz vorhandenen Strukturelemente, 99-1 Mol-% eines wiederkehrenden Strukturelementes der Formel I

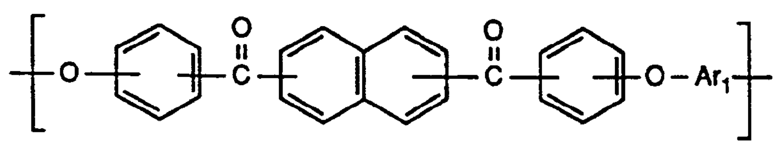
(I)

und 1-99 Mol-% eines wiederkehrenden Strukturelementes der Formel II

$$-\!\!\left[O-Ar_2-O-Ar_1\right]\!\!- \qquad (II)$$

enthalten, worin im Strukturelement der Formel I die aromatischen Ringe unsubstituiert oder durch ein oder mehrere $C_1$-$C_4$-Alkyle, $C_1$-$C_4$-Alkoxy oder Halogenatome substituiert sind,
$Ar_1$ einen unsubstituierten oder durch ein oder mehrere $C_1$-$C_4$-Alkyle, $C_1$-$C_4$-Alkoxy oder Halogene substituierten Rest der Formeln IIIa-IIIc

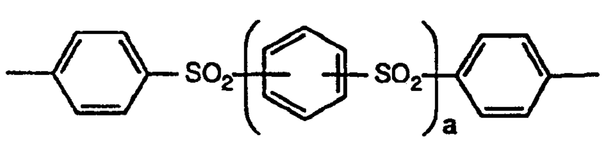
(IIIa),

wobei a für Null oder die Zahl 1 steht,

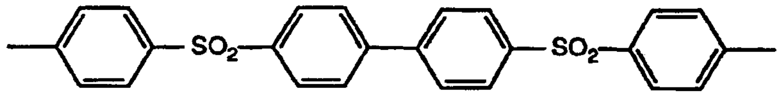 (IIIb)

oder

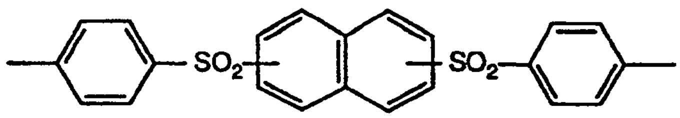 (IIIc)

bedeutet und

$Ar_2$ einen unsubstituierten oder durch ein oder mehrere $C_1$-$C_4$-Alkyle, $C_1$-$C_4$-Alkoxy oder Halogene substituierten Rest der Formeln IVa-IVe

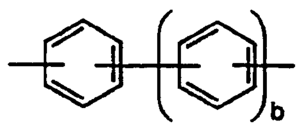 (IVa),

wobei b Null oder die Zahl 1 bedeutet,

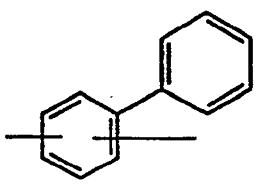 (IVb), 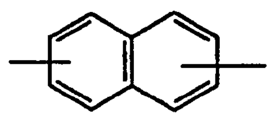 (IVc),

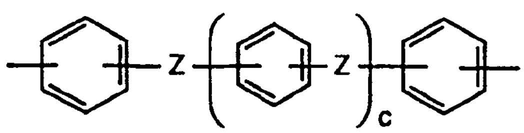 (IVd),

wobei c Null oder die Zahl 1 ist,

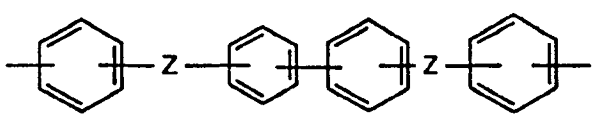 (IVe)

darstellt, worin Z für $-CO-$, $-SO_2-$, $-SO-$, $-S-$, $-O-$, $-C(CH_3)_2$, $-C(CF_3)_2$, $-CH_2-$, $-C(CH_3)(C_6H_5)-$ oder $-PO(R)-$ steht, worin R ein Methyl oder Phenyl bedeutet, dadurch gekennzeichnet, dass man ein Gemisch aus einer Diphenolverbindung der Formel V

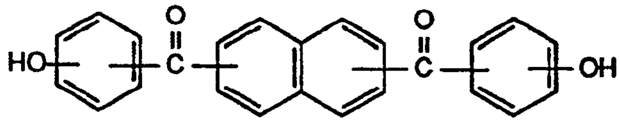 (V),

worin die aromatischen Ringe unsubstituiert oder durch ein oder mehrere $C_1$-$C_4$-Alkyle, $C_1$-$C_4$-Alkoxy oder Halogenatome substituiert sind, und einer darin bis zu 99 Mol-% enthaltenen Diphenolverbindung der Formel VI

$$HO\text{-}Ar_2\text{-}OH \quad (VI),$$

worin $Ar_2$ die gleiche Bedeutung wie in Formel II hat, in äquimolaren Mengen mit einer Dihalogenverbindung der Formel VII

$$Hal\text{-}Ar_1\text{-}Hal \quad (VII),$$

worin Art die gleiche Bedeutung wie in Formel II hat und Hal für ein Halogenatom, vorzugsweise Fluor oder Chlor, steht, in Gegenwart von Alkali und in einem aprotischen Lösungsmittel polykondensiert oder
(b) ein Gemisch aus einer Dihalogenverbindung der Formel VIII

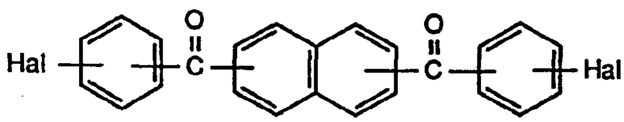 (VIII),

worin die aromatischen Ringe unsubstituiert oder durch ein oder mehrere $C_1$-$C_4$-Alkyle, $C_1$-$C_4$-Alkoxy oder Halogenatome substituiert sind und Hal für ein Halogenatom, vorzugsweise Fluor oder Chlor, steht, und einer darin bis zu 99 Mol-% enthaltenen Dihalogenverbindung der Formel VII in äquimolaren Mengen mit einer Diphenolverbindung der Formel VI in Gegenwart von Alkali und in einem aprotischen Lösungsmittel polykondensiert, bis das erhaltene Polyarylenethersulfon eine reduzierte Viskosität von 0,1 bis 2,0 dl/g aufweist, gemessen an einer 1%igen Lösung in NMP bei 25°C.